(19)

Europäisches Patentamt

European Patent Office

Office européen des brevets

(11) **EP 3 789 458 A1**

(12) **EUROPEAN PATENT APPLICATION**
published in accordance with Art. 153(4) EPC

(43) Date of publication:
10.03.2021 Bulletin 2021/10

(21) Application number: 19806554.2

(22) Date of filing: 23.05.2019

(51) Int Cl.:
*C08L 81/02* (2006.01)　　*C08L 23/08* (2006.01)
*C08L 27/18* (2006.01)

(86) International application number:
**PCT/JP2019/020432**

(87) International publication number:
**WO 2019/225694 (28.11.2019 Gazette 2019/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 25.05.2018　JP 2018100751

(71) Applicant: DAIKIN INDUSTRIES, LTD.
Osaka 530-8323 (JP)

(72) Inventors:
• **SAIGUSA, Yoshihiro**
**Osaka-Shi, Osaka 530-8323 (JP)**

• **MUKAE, Hirofumi**
**Osaka-Shi, Osaka 530-8323 (JP)**
• **ARAI, Kanako**
**Osaka-Shi, Osaka 530-8323 (JP)**
• **ISHIHARA, Yuimi**
**Osaka-Shi, Osaka 530-8323 (JP)**
• **MATSUMOTO, Haruna**
**Osaka-Shi, Osaka 530-8323 (JP)**
• **KONO, Hideki**
**Osaka-Shi, Osaka 530-8323 (JP)**

(74) Representative: **Hoffmann Eitle**
**Patent- und Rechtsanwälte PartmbB**
**Arabellastraße 30**
**81925 München (DE)**

(54) **RESIN COMPOSITION**

(57)　Provided is a resin composition having excellent mechanical properties such as impact resistance, tensile properties, and bending properties. The resin composition contains a polyarylene sulfide (a); a fluorine-containing copolymer (b); and a reactive functional group-containing compound (c), the polyarylene sulfide (a) and the fluorine-containing copolymer (b) giving a mass ratio (a):(b) of 99:1 to 40:60, the compound (c) being present in an amount of 0.1 to 35 parts by mass relative to 100 parts by mass of a total of the polyarylene sulfide (a) and the fluorine-containing copolymer (b), the resin composition having a tensile elongation at break in accordance with ASTM D 638 of 15% or more.

EP 3 789 458 A1

**Description**

TECHNICAL FIELD

The disclosure relates to resin compositions.

BACKGROUND ART

Patent Literature 1 discloses a composition containing a polyarylene sulfide (I) and a fluororesin (II) that is a tetrafluoroethylene/hexafluoropropylene copolymer, the fluororesin (II) in the composition having an average dispersed particle size of not smaller than 0.1 $\mu$m and smaller than 2.5 $\mu$m.

Patent Literature 2 discloses a resin composition containing a polymer alloy, the polymer alloy having a sea-island structure, the sea-island structure including, as a sea component, a polyphenylene sulfide (resin A) and, as an island component, a fluororesin (resin B) having an equivalent round average diameter of 10 $\mu$m or less, the resin A and the resin B giving a mass-based mixture ratio satisfying 60/40 $\leq$ (resin A)/(resin B) $\leq$ 80/20.

Patent Literature 3 discloses a polyphenylene sulfide resin composition containing 99 to 51% by volume of a polyphenylene sulfide resin (a) and 1 to 49% by volume of a reactive functional group-containing fluororesin (b) relative to 100% by volume of the total of the component (a) and the component (b), the component (a) forming a continuous phase (sea phase) and the component (b) forming a dispersed phase (island phase) in morphological observation with an electron microscope, the number average dispersed particle size r1 of the dispersed phase consisting of the component (b) and the number average dispersed particle size r2 of the dispersed phase consisting of the component (b) after melt accumulation at 320°C for 30 minutes giving a ratio r2/r1 of 1.5 or lower.

Patent Literature 4 discloses a polyphenylene sulfide composition containing a polyphenylene sulfide (A) and a melt-processable fluorine-containing copolymer (B) containing at least one reactive functional group selected from the group consisting of a carbonyl group-containing group, a hydroxy group, an epoxy group, and an isocyanate group, the reactive functional group being derived from at least one selected from the group consisting of a monomer used for production of a main chain of the fluorine-containing copolymer (B), a chain transfer agent, and a polymerization initiator.

Patent Literature 5 discloses a resin composition containing 50 to 99.5% by weight of the following (a) and 0.5 to 50% by weight of the following (b) in the total amount of (a) and (b), the resin composition further containing the following (c) in a total proportion of more than 0 parts by weight and not more than 250 parts by weight relative to 100 parts by weight of the total of (a) and (b), the components (a), (b), and (c) being:

(a) a polyphenylene sulfide;
(b) a fluororesin as a copolymer of tetrafluoroethylene and perfluoro(alkyl vinyl ether) containing a C1-C6 alkyl group, having a solidification temperature ($T_{mc}$) of at least 237°C when cooled at a cooling rate of 10°C/min after melting in a nitrogen atmosphere at 330°C and having a melt index of at least 0.1 as measured under measuring conditions of 330°C and a 5-kg load using an orifice having a diameter of 2.095 mm and a length of 8 mm, wherein the polymerized unit based on the latter is present in an amount of 1 to 5 mol%; or a fluororesin as a copolymer of tetrafluoroethylene and hexafluoropropylene, wherein the polymerized unit based on the latter is present in an amount of 1 to 20 mol%; and
(c) at least one selected from the group consisting of an organic reinforcing material, an inorganic reinforcing material, and a filler.

Patent Literature 6 discloses a polymer mixture containing a sulfur polymer and a thermoplastically processable fluoropolymer, the polymer mixture containing a sulfur polymer component in an amount of 0.1 to 20% by weight.

Patent Literature 7 discloses a resin composition containing a fluorine-containing polymer (A) and a non-fluorine thermoplastic resin (B) having a fuel permeability of 5 g·mm/m$^2$·day or less.

Patent Literature 8 discloses a polyphenylene sulfide (per)fluoropolymer material containing a material produced via melt modification of a polyphenylene sulfide (PPS) polymer matrix with modified (per)fluoropolymers distributed therein in a (poly)disperse manner. The (per)fluoropolymers are modified with functional groups, and the modified (per)fluoropolymer particles are bonded to the PPS polymer matrix via chemical couplings. The chemical couplings have taken place during the melt modification through reaction with functional reactive groups of the (per)fluoropolymers and/or with functional groups of constant (long-life) perfluorocarbon (peroxy) radicals of the (per)fluoropolymers produced during the melt modification and/or with functional (re)active groups of the (per)fluoropolymers produced during the melt modification.

Patent Literature 9 discloses a polyphenylene sulfide resin composition containing 80 to 250 parts by weight of (b) one or more copolymers selected among a tetrafluoroethylene/hexafluoropropylene copolymer, an ethylene/tetrafluoroethylene copolymer and a tetrafluoroethylene/perfluoro(alkyl vinyl ether) copolymer, relative to 100 parts by weight of (a) a polyphenylene sulfide resin, wherein a molded product made of the resin composition has a resin phase-separated structure observed with an electron microscope, such that (a) the polyphenylene sulfide resin forms a continuous phase, that (b) one copolymer selected among the tetrafluoroethylene/hexafluoropropylene copolymer, the ethylene/tetrafluoroethylene copolymer and the tetrafluoroethylene/perfluoro(alkyl vinyl ether) copolymer forms primary dispersed phases, and that the primary dispersed phase in the resin composition includes secondary dispersed phases formed by a component different from the component of the primary dispersed phase.

Patent Literature 10 discloses a fluoropolymer alloy, which contains a melt fabricable extra-high-molecular weight fluorinated ethylene-propylene copolymer and one or more other polymers selected from the group consisting of polytetrafluoroethylene, polychlorotrifluoroethylene, polyvinylidene fluoride, tetrafluoroethylene-ethylene copolymer, polysulfone, polyethylene, polypropylene, polyimide, polycarbonate, polyphenylene oxide and polyphenylene sulfide.

CITATION LIST

- Patent Literature

Patent Literature 1: WO 2015/008583
Patent Literature 2: JP 2014-105258 A
Patent Literature 3: JP 2015-110732 A
Patent Literature 4: JP 2016-27147 A
Patent Literature 5: JP 4223089 B
Patent Literature 6: JP 2002-322334 A
Patent Literature 7: JP 2006-328195 A
Patent Literature 8: WO 2009/021922
Patent Literature 9: JP 5733470 B
Patent Literature 10: JP S61-281146 A

SUMMARY OF INVENTION

- Technical Problem

The disclosure provides a resin composition having excellent mechanical properties such as impact resistance, tensile properties, and bending properties.

- Solution to Problem

The disclosure relates to a resin composition containing: a polyarylene sulfide (a); a fluorine-containing copolymer (b); and a reactive functional group-containing compound (c), the polyarylene sulfide (a) and the fluorine-containing copolymer (b) giving a mass ratio (a):(b) of 99:1 to 40:60, the compound (c) being present in an amount of 0.1 to 35 parts by mass relative to 100 parts by mass of a total of the polyarylene sulfide (a) and the fluorine-containing copolymer (b), the resin composition having a tensile elongation at break in accordance with ASTM D 638 of 15% or more.

The resin composition of the disclosure preferably has a Charpy impact strength in accordance with ASTM D 6110 of 5.5 kJ/m$^2$ or more.

The resin composition of the disclosure preferably has a surface roughness Ra in accordance with JIS B 0601-1994 of 0.10 μm or less.

The fluorine-containing copolymer (b) is preferably a copolymer containing, of all polymerized units, 75% by mass or more of a polymerized unit based on tetrafluoroethylene and 1% by mass or more of a polymerized unit based on at least one selected from the group consisting of hexafluoropropylene and perfluoro(alkyl vinyl ether), and the fluorine-containing copolymer (b) preferably contains 5 to 500 carbonyl groups for each $1 \times 10^6$ carbon atoms.

The fluorine-containing copolymer (b) preferably includes at least one selected from the group consisting of a copolymer (b1) containing, of all polymerized units, 98 to 80% by mass of a polymerized unit based on tetrafluoroethylene and 2 to 20% by mass of a polymerized unit based on hexafluoropropylene, a copolymer (b2) containing, of all polymerized units, 98 to 85% by mass of a polymerized unit based on tetrafluoroethylene and 2 to 15% by mass of a polymerized unit based on perfluoro(alkyl vinyl ether), and a copolymer (b3) containing, of all polymerized units, 95 to 77% by mass of a polymerized unit based on tetrafluoroethylene, 5 to 18% by mass of a polymerized unit based on hexafluoropropylene, and more than 0% by mass and not more than 5% by mass of a polymerized unit based on perfluoro(alkyl vinyl ether).

The compound (c) is preferably an ethylene/glycidyl methacrylate copolymer having a glycidyl methacrylate content of 1 to 20% by mass.

The fluorine-containing copolymer (b) preferably has a melt flow rate at 300°C of 0.1 to 100 g/10 min.

Also, the fluorine-containing copolymer (b) preferably has a melt flow rate at 372°C of 0.1 to 100 g/10 min.

In the resin composition of the disclosure, the polyarylene sulfide (a) preferably forms a continuous phase and the fluorine-containing copolymer (b) preferably forms a dispersed phase.

The fluorine-containing copolymer (b) preferably has an average dispersed particle size of 0.01 to 5 pm.

The resin composition of the disclosure preferably has a melt flow rate at 300°C of 1 to 200 g/10 min.

Also, the resin composition of the disclosure preferably has a melt flow rate at 372°C of 1 to 200 g/10 min.

- Advantageous Effects of Invention

Having the above features, the resin composition of the disclosure has excellent mechanical properties such as impact resistance, tensile properties, and bending properties.

DESCRIPTION OF EMBODIMENTS

The resin composition of the disclosure contains a polyarylene sulfide (a) (hereinafter, also referred to as a "PAS (a)"); a fluorine-containing copolymer (b); and a reactive functional group-containing compound (c), the polyarylene sulfide (a) and the fluorine-containing copolymer (b) giving a mass ratio (a):(b) of 99:1 to 40:60, the compound (c) being present in an amount of 0.1 to 35 parts by mass relative to 100 parts by mass of a total of the polyarylene sulfide (a) and the fluorine-containing copolymer (b), the resin composition having a tensile elongation at break in accordance with ASTM D 638 of 15% or more.

Dispersing a fluorine-containing copolymer in a polyarylene sulfide (a) has been conventionally difficult because of low compatibility therebetween. Thus, conventional techniques have unfortunately provided resin compositions having insufficient mechanical properties such as impact resistance, tensile properties, and bending properties. For example, Patent Literature 1 discloses a resin composition having a favorable average dispersed particle size. Unfortunately, the composition, containing no compatibilizer, has poor compatibility between the polyphenylene sulfide and the fluorine-containing polymer. Thus, improvement in mechanical properties such as impact resistance and tensile properties are presumably insufficient. Patent Literature 2 specifically discloses use of a maleic anhydride-modified polyethylene as a compatibilizer. Still, the maleic anhydride-modified polyethylene fails to sufficiently improve the impact resistance and the tensile elongation at break. Patent Literature documents 3 and 9 disclose use of a silane coupling agent as a compatibilizer but fail to provide a molded article having good mechanical properties and good surface roughness. Patent Literature 4 discloses a resin composition having good mechanical properties, but the resin composition is required to contain a fluorine-containing copolymer (B) having a high reactive functional group content. Patent Literature 5 discloses a resin composition essentially containing an organic reinforcing material, an inorganic reinforcing material, or a filler. These fillers presumably fail to improve the tensile elongation at break. Patent Literature 6 discloses a resin composition containing a small amount of a sulfur polymer, which impairs the mechanical strength originally possessed by the sulfur polymer. Patent Literature 7 discloses a polyphenylene sulfide as a non-fluorine thermoplastic resin. Still, the resin composition of Patent Literature 7, containing no compatibilizer, presumably has insufficient mechanical properties due to poor compatibility between the polyphenylene sulfide and the fluorine-containing polymer. Patent Literature 8 fails to specifically disclose chemical coupling between a (per)fluoro polymer other than PTFE and a polyphenylene sulfide polymer. Poor compatibility between a (per)fluoro polymer containing a small amount of a reactive functional group and a polyphenylene sulfide polymer requires chemical modification, which disadvantageously raises the cost. Patent Literature 10 discloses specific use of an ultrahigh molecular weight tetrafluoroethylene-hexafluoropropylene copolymer. Unfortunately, this copolymer is very different from the fluorine-containing copolymer of the disclosure in melt flow index, and is thus very different from the resin serving as a continuous phase in melt viscosity, which presumably impairs the dispersion state. The inventors conducted intensive studies on dispersing a fluorine-containing copolymer in a polyarylene sulfide (a) to find that use of a reactive functional group-containing compound (c) allows a fluorine-containing copolymer to be finely dispersed in a polyarylene sulfide (a) even when the fluorine-containing copolymer contains a small amount of a reactive functional group, which can provide an alloyed resin composition. Containing a polyarylene sulfide (a), a fluorine-containing copolymer (b), and a reactive functional group-containing compound (c) in specific proportions, the resin composition of the disclosure can provide a molded article having excellent mechanical properties such as impact resistance, tensile properties, and bending properties.

The resin composition of the disclosure has a tensile elongation at break in accordance with ASTM D 638 of 15% or more. The tensile elongation at break is preferably 16% or more, more preferably 17% or more.

The resin composition of the disclosure preferably has a Charpy impact strength in accordance with ASTM D 6110 of 5.5 kJ/m$^2$ or more, more preferably 6.0 kJ/m$^2$ or more, still more preferably 6.5 kJ/m$^2$ or more. The upper limit is preferably 50 kJ/m$^2$ or less, more preferably 30 kJ/m$^2$ or less, still more preferably 10 kJ/m$^2$ or less.

The resin composition of the disclosure preferably has a surface roughness Ra (arithmetic average roughness) in accordance with JIS B 0601-1994 of 0.10 $\mu$m or less, more preferably 0.08 $\mu$m or less. The surface roughness Ra is determined by, for example, measuring the surface roughness three times at five measurement points in accordance with JIS B 0601-1994 using a surface roughness tester (SURFTEST SV-600 available from Mitutoyo Corporation) and averaging the resulting measurement values.

The resin composition of the disclosure preferably has a melt flow rate (MFR) at 300°C and a 2.16-kg load of 1 to 200 g/10 min, more preferably 5 to 100 g/10 min. A MFR within the above range allows the resin composition of the disclosure to reduce occurrence of burr, which improves the processability. The lower limit of the MFR is still more preferably 10 g/10 min, particularly preferably 15 g/10 min. In order to further improve the processability, the upper limit of the MFR is still more preferably 70 g/10 min, particularly preferably 50 g/10 min. The MFR of the resin composition is determined with a melt indexer in accordance with ASTM D 1238.

The resin composition of the disclosure preferably has a melt flow rate (MFR) at 372°C and a 5.0-kg load of 1 to 200 g/10 min, more preferably 5 to 100 g/10 min. A MFR within the above range allows the resin composition of the disclosure to reduce occurrence of burr, which improves the processability. The lower limit of the MFR is still more preferably 10 g/10 min, particularly preferably 15 g/10 min. In order to further improve the processability, the upper limit of the MFR is still more preferably 70 g/10 min, particularly preferably 50 g/10 min. The MFR of the resin composition is determined with a melt indexer in accordance with ASTM D 1238.

The fluorine-containing copolymer (b) is preferably a copolymer of tetrafluoroethylene (TFE) and at least one selected from the group consisting of hexafluoropropylene (HFP) and perfluoro(alkyl vinyl ether) (PAVE). Examples of the PAVE include perfluoro(methyl vinyl ether), perfluoro(ethyl vinyl ether), and perfluoro(propyl vinyl ether). Such a fluorine-containing copolymer (b) is efficiently dispersed in the PAS (a), which can provide a resin composition having better mechanical properties.

The fluorine-containing copolymer (b) preferably contains a carbonyl group (-C(=O)-) at a main chain terminal or in a side chain. Containing a carbonyl group at a main chain terminal or in a side chain of the fluorine-containing copolymer (b), the resin composition of the disclosure allows the fluorine-containing copolymer (b) to be finely dispersed in the PAS (a).

The carbonyl group in the disclosure may be part of a functional group containing -C(=O)-.

Preferred examples of a functional group containing a carbonyl group include

a carbonate group (-O-C(=O)-OR$^3$ (wherein R$^3$ is a C1-C20 alkyl group or a C2-C20 alkyl group containing an oxygen atom as an ether bond)),

a haloformyl group (-C(=O)X$^1$, wherein X$^1$ is a halogen atom),

a formyl group (-C(=O)H),

a group represented by the formula: -R$^4$-C(=O)-R$^5$ (wherein R$^4$ is a C1-C20 divalent organic group, and R$^5$ is a C1-C20 monovalent organic group),

a group represented by the formula: -O-C(=O)-R$^6$ (wherein R$^6$ is a C1-C20 alkyl group or a C2-C20 alkyl group containing an oxygen atom as an ether bond),

a carboxy group (-C(=O)OH),

an alkoxy carbonyl group (-C(=O)OR$^7$ (wherein R$^7$ is a C1-C20 monovalent organic group)),

a carbamoyl group (-C(=O)NR$^8$R$^9$ (wherein R$^8$ and R$^9$ may be the same as or different from each other and are each a hydrogen atom or a C1-C20 monovalent organic group)),

an acid anhydride bond (-C(=O)-O-C(=O)-), and

an isocyanate group (-N=C=O).

Specific examples of R$^3$ include a methyl group, an ethyl group, a propyl group, an isopropyl group, and a butyl group. Specific examples of R$^4$ include a methylene group, a -CF$_2$- group, and a -C$_6$H$_4$- group. Specific examples of R$^5$ include a methyl group, an ethyl group, a propyl group, an isopropyl group, and a butyl group. Specific examples of R$^7$ include a methyl group, an ethyl group, a propyl group, an isopropyl group, and a butyl group. Specific examples of R$^8$ and R$^9$ include a hydrogen atom, a methyl group, an ethyl group, a propyl group, an isopropyl group, a butyl group, and a phenyl group.

In terms of easy introduction to the fluorine-containing copolymer (b) and the reactivity with the PAS (a), the carbonyl group is preferably part of at least one organic group selected from the group consisting of a carbonate group, a haloformyl group, a formyl group, a group represented by the following formula:

$$-R^4-C(=O)-R^5$$

(wherein R$^4$ is a C1-C20 divalent organic group, and R$^5$ is a C1-C20 monovalent organic group), a group represented by the following formula:

$$-O-C(=O)-R^6$$

(wherein $R^6$ is a C1-C20 alkyl group or a C2-C20 alkyl group containing an oxygen atom as an ether bond), a carboxy group, an alkoxy carbonyl group, a carbamoyl group, an acid anhydride bond, and an isocyanate group.

The fluorine-containing copolymer (b) preferably contains 5 to 500 carbonyl groups for each 1 x $10^6$ carbon atoms. The number of carbonyl groups is more preferably 10 or more, still more preferably 50 or more. The number of carbonyl groups is calculated from the amount of the functional group (the number of functional groups containing a carbonyl group) determined from the carbonyl absorbance that is determined with an infrared spectrometer (IR spectrometer). Specifically, white powder of the fluorine-containing copolymer (b) or a specimen cut out of a melt-extruded pellet of the fluorine-containing copolymer (b) is compression-molded at room temperature to form a 50-to 200-μm-thick film. This film is analyzed by infrared absorption spectrometry and thereby the absorption peak assigned to a functional group containing a carbonyl group is determined. Then, the number N of functional groups containing a carbonyl group in the polymer forming the fluorine-containing copolymer (b) for each $10^6$ main chain carbon atoms is calculated according to the following equation.

$$N = 500 \ AW/\varepsilon df$$

A: absorption peak assigned to a functional group containing a carbonyl group
$\varepsilon$: mole absorbance coefficient of a peak assigned to a functional group containing a carbonyl group
W: average molecular weight of the monomer calculated from the composition of the fluorine-containing copolymer (b)
d: film density (g/cm$^3$)
f: film thickness (mm)

The fluorine-containing copolymer (b) is preferably a copolymer containing, of all polymerized units, 75% by mass or more of a polymerized unit based on TFE and 1% by mass or more of a polymerized unit based on at least one selected from the group consisting of HFP and PAVE. The proportion of the polymerized unit based on TFE is more preferably 77% by mass or more, while preferably 99% by mass or less, more preferably 98.5% by mass or less of all polymerized units. The proportion of the polymerized unit based on at least one selected from the group consisting of HFP and PAVE is more preferably 1.5% by mass or more, while preferably 25% by mass or less, more preferably 23% by mass or less of all polymerized units.

The fluorine-containing copolymer (b) is a copolymer containing, of all polymerized units, 75% by mass or more of a polymerized unit based on TFE and 1% by mass or more of a polymerized unit based on at least one selected from the group consisting of HFP and PAVE. The copolymer may contain 5 to 500 carbonyl groups for each 1 × $10^6$ carbon atoms. The proportion of the polymerized unit based on TFE is more preferably 77% by mass or more, while preferably 99% by mass or less, more preferably 98.5% by mass or less of all polymerized units. The proportion of the polymerized unit based on at least one selected from the group consisting of HFP and PAVE is more preferably 1.5% by mass or more, while preferably 25% by mass or less, more preferably 23% by mass or less of all polymerized units. The number of carbonyl groups is more preferably 30 or more.

The fluorine-containing copolymer (b) preferably includes at least one selected from the group consisting of
a copolymer (b1) containing, of all polymerized units, 98 to 80% by mass of a polymerized unit based on TFE and 2 to 20% by mass of a polymerized unit based on HFP,
a copolymer (b2) containing, of all polymerized units, 98 to 85% by mass of a polymerized unit based on TFE and 2 to 15% by mass of a polymerized unit based on PAVE, and
a copolymer (b3) containing, of all polymerized units, 95 to 77% by mass of a polymerized unit based on TFE, 5 to 18% by mass of a polymerized unit based on HFP, and more than 0% by mass and not more than 5% by mass of a polymerized unit based on PAVE.

In the copolymer (b1), the proportion of the polymerized unit based on TFE is more preferably 84% by mass or more, while more preferably 95% by mass or less of all polymerized units. The proportion of the polymerized unit based on HFP is more preferably 5% by mass or more, still more preferably 8% by mass or more, while more preferably 16% by mass or less of all polymerized units.

In the copolymer (b2), the proportion of the polymerized unit based on TFE is more preferably 90% by mass or more, while more preferably 97% by mass or less of all polymerized units. The proportion of the polymerized unit based on PAVE is more preferably 3% by mass or more, while more preferably 10% by mass or less of all polymerized units.

In the copolymer (b3), the proportion of the polymerized unit based on TFE is more preferably 79% by mass or more, while more preferably 94.5% by mass or less of all polymerized units. The proportion of the polymerized unit based on HFP is more preferably 16% by mass or less of all polymerized units. The proportion of the polymerized unit based on PAVE is more preferably 0.5% by mass or more of all polymerized units.

The mass ratio as used herein is determined from the proportions of the TFE unit, the HFP unit, and the PAVE unit, which are measured with an NMR analyzer or an infrared absorption instrument.

The fluorine-containing copolymer (b) preferably has a melt flow rate (MFR) at 300°C and a 2.16-kg load of 0.1 to 100 g/10 min, more preferably 0.5 to 40 g/10 min. A MFR within the above range improves the processability of the resin composition of the disclosure.

The lower limit of the MFR is still more preferably 1 g/10 min, particularly preferably 2 g/10 min. In order to further improve the processability, the upper limit of the MFR is still more preferably 30 g/10 min, particularly preferably 20 g/10 min.

The MFR of the fluorine-containing copolymer (b) is determined as the mass (g/10 min) of the polymer flowed out of a nozzle having an inner diameter of 2.09 mm and a length of 8 mm per 10 minutes using a melt indexer prewarmed at 300°C for five minutes at a 2.16-kg load in accordance with ASTM D1238.

The fluorine-containing copolymer (b) preferably has a melt flow rate (MFR) at 372°C and a 5.0-kg load of 0.1 to 100 g/10 min, more preferably 1 to 60 g/10 min. A MFR within the above range improves the processability of the resin composition of the disclosure.

The lower limit of the MFR is still more preferably 5 g/10 min, particularly preferably 10 g/10 min. In order to further improve the processability, the upper limit of the MFR is still more preferably 50 g/10 min, particularly preferably 40 g/10 min.

The MFR of the fluorine-containing copolymer (b) is determined as the mass (g/10 min) of the polymer flowed out of a nozzle having an inner diameter of 2.09 mm and a length of 8 mm per 10 minutes using a melt indexer prewarmed at 372°C for five minutes at a 5.0-kg load in accordance with ASTM D1238.

The melting point of the fluorine-containing copolymer (b) is preferably, but not limited to, a temperature not higher than the melting point of the PAS (a) because for molding, the fluorine-containing copolymer (b) is preferably melted at the temperature the PAS (a) melts. For example, the melting point of the fluorine-containing copolymer (b) is preferably 230°C to 350°C. In order to improve the heat resistance, abrasion resistance, and molding processability, the melting point is more preferably 240°C to 340°C, still more preferably 250°C to 320°C. The melting point of the fluorine-containing copolymer (b) is determined as a temperature corresponding to the maximum value on a heat-of-fusion curve drawn using a differential scanning calorimeter (DSC) at a temperature-increasing rate of 10°C/min.

The resin composition of the disclosure contains a PAS (a). The presence of the PAS (a) allows a resulting molded article to have a high continuous use temperature and excellent heat resistance. The resin composition can also have excellent abrasion resistance and molding processability.

An example of the PAS (a) is one containing a repeating unit represented by the following formula:

$$-(Ar-S)-$$

(wherein Ar is an arylene group, and S is sulfur). The repeating unit is preferably present in the resin in a proportion of 70 mol% or more.

Examples of the arylene group include p-phenylene, m-phenylene, o-phenylene, alkyl-substituted phenylene, phenyl-substituted phenylene, halogen-substituted phenylene, amino-substituted phenylene, amide-substituted phenylene, p,p'-diphenylene sulfone, p,p'-biphenylene, and p,p'-biphenylene ether.

The polyarylene sulfide (a) is roughly categorized into resins having crosslinking or a branched structure (crosslinked resins) and resins substantially free from crosslinking and a branched structure (linear resins). In the disclosure, any of crosslinked resins and linear resins can be used without troubles.

A preferred example of the PAS (a) is a polyphenylene sulfide.

The PAS (a) preferably has a glass transition temperature of 70°C or higher, more preferably 80°C or higher, still more preferably 85°C or higher. A glass transition temperature within the above range can improve the heat resistance of the resin composition. The glass transition temperature of the PAS (a) is preferably 300°C or lower, more preferably 250°C or lower. The glass transition temperature is measured with a differential scanning calorimeter (DSC).

The PAS (a) preferably has a melting point of 180°C or higher, more preferably 190°C or higher. A melting point within the above range can improve the heat resistance of the resin composition. The melting point of the PAS (a) is preferably 380°C or lower, more preferably 350°C or lower. The melting point is measured with a differential scanning calorimeter (DSC).

In the resin composition of the disclosure, the PAS (a) and the fluorine-containing copolymer (b) preferably give a mass ratio (a) : (b) of 99:1 to 40:60. A mass ratio within the above range allows the resin composition to have excellent tensile elongation at break and to show high impact strength. The PAS (a) preferably forms a continuous phase and the fluorine-containing copolymer (b) preferably forms a dispersed phase. Thus, the mass ratio of the fluororesin-containing copolymer (b) to the PAS (a) is preferably as small as possible. The mass ratio (a) : (b) is more preferably in the range of the 98:2 to 50:50, still more preferably in the range of 95:5 to 70:30, particularly preferably in the range of 90:10 to 75:25. A mass ratio (a):(b) of the PAS (a) and the fluorine-containing copolymer (b) within the range of 99:1 to 40:60 tends to allow the PAS (a) to serve as a matrix of the resin composition. When the amount of the fluorine-containing copolymer (b) is further greater than that of the PAS (a), the fluorine-containing copolymer (b) tends to serve as a matrix of the resin composition.

In the resin composition of the disclosure, the PAS (a) preferably forms a continuous phase and the fluorine-containing copolymer (b) preferably forms a dispersed phase. The fluorine-containing copolymer (b) preferably has an average dispersed particle size of 0.01 to 5 $\mu$m. An average dispersed particle size within the above range allows the resin composition of the disclosure to have better affinity between the PAS (a) and the fluorine-containing copolymer (b) and to provide a molded article having excellent mechanical properties such as impact resistance, tensile properties, and bending properties. The average dispersed particle size is preferably 4.8 $\mu$m or less, more preferably 4.5 $\mu$m or less. The lower limit of the average dispersed particle size may be 1.0 pm, for example.

The average dispersed particle size is determined by observing a cross section of a section sliced from a strand of the resin composition of the disclosure with a confocal laser microscope and analyzing the obtained image with image analysis software (Image J). A domain in the dispersed phase is selected and the equivalent circle diameter thereof is determined. The equivalent circle diameters of 20 domains in the dispersed phase are determined and then averaged to provide the average dispersed particle size (before MFR measurement) and the average dispersed particle size (after MFR measurement).

The resin composition of the disclosure contains a reactive functional group-containing compound (c). The presence of the compound (c) allows the resin composition to have better affinity between the PAS (a) and the fluorine-containing copolymer (b) and to provide a molded article having excellent mechanical properties such as impact resistance, tensile properties, and bending properties.

Examples of the reactive functional group include an epoxy group, an amino group, a hydroxy group, a carboxyl group, a thiol group, and an isocyanate group, with an epoxy group being preferred. The compound (c) is preferably a copolymer containing a monomer unit derived from ethylene and a monomer unit derived from a monomer containing the reactive functional group. This copolymer may further contain a reactive functional group-free monomer unit derived from an $\alpha$-olefin or a reactive functional group-free vinyl monomer unit. In terms of the compatibility with the fluorine-containing copolymer (b), the reactive functional group is preferably other than an acid anhydride group.

Examples of the monomer containing the reactive functional group include $\alpha,\beta$-unsaturated glycidyl esters such as glycidyl methacrylate and glycidyl acrylate and $\alpha,\beta$-unsaturated glycidyl ethers such as allyl glycidyl ether and 2-methyl allyl glycidyl ether, with glycidyl methacrylate being preferred.

Examples of the reactive functional group-free vinyl monomer include unsaturated carboxylates such as methyl acrylate, ethyl acrylate, methyl methacrylate, and butyl acrylate; unsaturated vinyl esters such as vinyl acetate and vinyl propionate; styrene; acrylonitrile; and conjugated dienes.

Examples of the compound (c) include an ethylene/glycidyl methacrylate copolymer, an ethylene/glycidyl methacrylate/methyl acrylate copolymer, an ethylene/glycidyl methacrylate/vinyl acetate copolymer, an ethylene/glycidyl methacrylate/propylene/butene copolymer, an ethylene/glycidyl methacrylate/styrene copolymer, and an ethylene/glycidyl methacrylate/acrylonitrile/styrene copolymer.

The compound (c) may also be a graft polymer obtained by graft polymerization of a copolymer such as polyethylene, an ethylene/$\alpha$-olefin copolymer, or a hydrogenerated or non-hydrogenerated styrene/conjugated diene-based copolymer with a monomer containing the reactive functional group. The compound (c) preferably includes at least one selected from the group consisting of an ethylene/glycidyl methacrylate copolymer, an ethylene/glycidyl methacrylate/methyl acrylate copolymer, and an ethylene/glycidyl methacrylate/vinyl acetate copolymer.

The compound (c) preferably contains a monomer unit derived from a monomer containing a reactive functional group in an amount of 0.01 to 30% by mass, more preferably 0.1 to 25% by mass, still more preferably 1 to 20% by mass. Here, the amount of all monomer units in an ethylene-based polymer containing the reactive functional group is defined as 100% by mass. The amount of the monomer unit derived from a monomer containing a reactive functional group is determined by infrared spectrometry.

The compound (c) is preferably an ethylene/glycidyl methacrylate copolymer having a glycidyl methacrylate content of 1 to 20% by mass. The glycidyl methacrylate content is more preferably 3 to 15% by mass, still more preferably 5 to 13% by mass.

Examples of a commercial product of the compound (c) include BF-E, BF-7M, and BF-7B available from Sumitomo Chemical Co., Ltd. The amount of the compound (c) is 0.1 to 35 parts by mass relative to 100 parts by mass of the total of the PAS (a) and the fluorine-containing copolymer (b). Less than 0.1 parts by mass of the compound (c) causes poor mechanical properties such as impact resistance, tensile properties, and bending properties, while more than 35 parts by mass of the compound (c) increases the melt viscosity to reduce the processability. The amount of the compound (c) is preferably 0.5 to 20 parts by mass, more preferably 1 to 15 parts by mass, still more preferably 1 to 10 parts by mass, further more preferably 3 to 10 parts by mass, particularly preferably 3 to 7 parts by mass, relative to 100 parts by mass of the total of the PAS (a) and the fluorine-containing copolymer (b) .

In order to improve the tensile elongation at break, the compound (c) preferably has a glass transition temperature of 0°C or lower, more preferably -10°C or lower, still more preferably -20°C or lower. The lower limit is preferably -50°C or higher, more preferably -40°C or higher.

The resin composition of the disclosure preferably contains the PAS (a), the fluorine-containing copolymer (b), and the compound (c) in a total amount of 90% by mass or more, more preferably 95% by mass or more, still more preferably 99% by mass or more of the whole resin composition. Also preferably, the resin composition of the disclosure substantially consists only of the PAS (a), the fluorine-containing copolymer (b), and the compound (c).

The resin composition of the disclosure contains the PAS (a), the fluorine-containing copolymer (b), and the compound (c), and may further contain a different component according to need. Examples of the different component include, but is not limited to, fibrous fillers such as glass fiber, carbon fiber, carbon milled fiber, carbon nanotube, carbon nanohorn, metal fiber, asbestos, rock wool, ceramic fiber, slag fiber, potassium titanate whisker, boron whisker, aluminum borate whisker, calcium carbonate whisker, titanium oxide whisker, wollastonite, palygorskite, sepiolite, aramid fiber, alumina fiber, silicon carbide fiber, ceramic fiber, asbestos fiber, gypsum fiber, metal fiber, polyimide fiber, and polybenzothiazole fiber; silicates such as fullerene, talc, wollastonite, zeolite, mica, clay, pyrophyllite, silica, bentonite, asbestos, and alumina silicate; metal compounds such as silicon oxide, magnesium oxide, calcium oxide, alumina, zirconium oxide, titanium oxide, and iron oxide; carbonates such as calcium carbonate, magnesium carbonate, and dolomite; sulfates such as calcium sulfate and barium sulfate; hydroxides such as calcium hydroxide and aluminum hydroxide; non-fibrous fillers such as glass bead, glass flake, glass powder, boron nitride, silicon carbide, carbon black, and graphite, and fillers, adhesion promoters, antioxidants, lubricants, processing aids, colorants, thermal stabilizers, phosphorus stabilizers, antistatic agents, glidants, mold lubricants, sliding materials, ultraviolet absorbers, dyes and pigments, reinforcing agents, dripping inhibitors, filling materials, and flame retarders.

The resin composition of the disclosure can be produced under typical conditions using a blending machine typically used for mixing resin compositions including a resin composition for molding, such as a blending mill, a Banbury mixer, a pressure kneader, or an extruder. In order to reduce the average dispersed particle size of the fluorine-containing copolymer (b), the blending machine is preferably a biaxial extruder, and the screws of the biaxial extruder preferably have a structure satisfying L/D = 35 or higher, still more preferably L/D = 40 or higher, particularly preferably L/D = 45 or higher. The ratio L/D represents effective length of screw (L)/screw diameter (D). Accordingly, the resin composition of the disclosure is preferably obtained by mixing the polyarylene sulfide (a) and the fluorine-containing copolymer (b) with a biaxial extruder having a screw structure of L/D = 35 or higher.

The resin composition of the disclosure is preferably produced by mixing the PAS (a), the fluorine-containing copolymer (b), and the compound (c) in a molten state, for example. Sufficient kneading of the PAS (a), the fluorine-containing copolymer (b), and the compound (c) can provide a resin composition of the disclosure having a desired dispersion state. The dispersion state affects the partial discharge inception voltage of the resulting molded article and moldability (cover material formation, thin-film formation) of the resin composition. Thus, the method for kneading should be appropriately selected so as to allow the molded article obtained from the resin composition to have a desired dispersion state.

The resin composition of the disclosure is preferably produced by, for example, a method of feeding a blending machine with the PAS (a), the fluorine-containing copolymer (b), and the compound (c) in appropriate proportions, optionally adding the different component(s), and melt kneading the components at a temperature not lower than the melting points of the PAS (a) and the fluorine-containing copolymer (b). The temperature for melt kneading may be appropriately set according to the types of the PAS (a) and the fluorine-containing copolymer (b), and is preferably 280°C to 360°C, for example. The time for kneading is usually one minute to one hour. The different component(s) may be preliminarily added to the PAS (a), the fluorine-containing copolymer (b), and the compound (c) followed by mixing, or may be added when the PAS (a), the fluorine-containing copolymer (b), and the compound (c) are blended.

The resin composition of the disclosure contains the PAS (a), the fluorine-containing copolymer (b), and the compound (c), and may or may not contain metal residue formed from at least one selected from the group consisting of an alkali metal element and an alkaline-earth metal element. The resin composition possibly contains a small amount of metal residue in the case of melt kneading in the presence of an alkali metal element or an alkaline-earth metal element or in the case of polymerization using a polymerization initiator containing an alkali metal element such as potassium persulfate. Still, the composition has no need to contain at least one selected from the group consisting of an alkali metal element and an alkaline-earth metal element in order to stabilize an instable end group. The "metal residue" as used herein means at least one selected from the group consisting of an alkali metal element and an alkaline-earth metal element, or a metal compound containing such a metal element.

In the resin composition of the disclosure, the mass of the at least one selected from the group consisting of an alkali metal element and an alkaline-earth metal element is preferably 0.3% or less of the resin composition. The upper limit of the concentration of the at least one selected from the group consisting of an alkali metal element and an alkaline-earth metal element is preferably 0.25%, more preferably 0.20%, still more preferably 0.15%, particularly preferably 0.13%. When both of an alkali metal element and an alkaline-earth metal element are used, the mass of the at least one selected from the group consisting of an alkali metal element and an alkaline-earth metal element means the total mass thereof.

The amount of the at least one selected from the group consisting of an alkali metal element and an alkaline-earth metal element is a value determined by ICP emission spectroscopy analysis.

The resin composition of the disclosure may have any shape such as a sheet, a film, a rod, or a pipe. Having excellent tensile strength, the resin composition of the disclosure is particularly suitable for a molded article in the form of a sheet or a film. The molded article in the form of a sheet or a film is suitable for applications such as electric wire, conductive wire cover, toilet supplies, and water accessories.

A molded article obtained by molding the resin composition of the disclosure is not only excellent in mechanical properties such as impact resistance, tensile properties, and bending properties and in water-repellency, but also excellent in heat resistance, chemical resistance, solvent resistance, strength, rigidity, low chemical permeability, dimensional stability, flame retardance, electrical characteristics, and durability. The molded article is thus suitable for various applications requiring these characteristics.

For example, the resin composition of the disclosure is usable for the following applications: in the electrical/electronic and semiconductor fields, parts of semiconductor or liquid crystal production devices, such as CMP retainer rings, etching rings, silicon wafer carriers, and IC chip trays, insulative films, small button batteries, cable connectors, and aluminum electrolytic capacitor cases; in the automobile field, thrust washers, oil filters, gears of automatic air conditioner control units, throttle body gears, ABS parts, AT seal rings, MT shift fork pads, bearings, seals, and clutch rings; in the industrial field, compressor parts, mass transit system cables, conveyor belt chains, connectors for oil field development machinery, and pump parts for hydraulic drive systems (bearings, port plates, piston ball joints); in the aerospace field, aircraft cabin interior parts and fuel pipe protection materials; and food/beverage manufacturing equipment parts and medical equipment parts (sterilization equipment, gas/liquid chromatograph). Having excellent strength, the molded article is also suitable for a solar cell back sheet. The molded article is also usable as a water-repellent film.

EXAMPLES

The disclosure is described with reference to examples, but the examples are not intended to limit the disclosure.

<Number of functional groups containing a carbonyl group>

White powder of the fluorine-containing copolymer (b) or a specimen cut out of a melt-extruded pellet of the fluorine-containing copolymer (b) was compression-molded at room temperature to form a 50- to 200-$\mu$m-thick film. This film was analyzed by infrared absorption spectrometry and thereby the absorption of the peak assigned to a functional group containing a carbonyl group was measured. Then, the number N of functional groups containing a carbonyl group in the polymer forming the fluorine-containing copolymer (b) for each $10^6$ main chain carbon atoms was calculated according to the following equation.

$$N = 500 \ AW/\varepsilon df$$

A: absorption peak assigned to a functional group containing a carbonyl group
$\varepsilon$: mole absorbance coefficient of a peak assigned to a functional group containing a carbonyl group
W: average molecular weight of the monomer calculated from the composition of the fluorine-containing copolymer (b)
d: film density (g/cm$^3$)
f: film thickness (mm)

The analysis by infrared absorption spectrometry was performed with Perkin-Elmer FTIR spectrometer (available from Perkin Elmer Japan Co., Ltd.). The film thickness was measured with a micrometer.

<Melt flow rate (MFR)>

Pellets were prepared by mixing components in the proportions shown in Table 1. Then, the MFR was determined as the mass (g/10 min) of the polymer flowed out of a nozzle having an inner diameter of 2.09 mm and a length of 8 mm per 10 minutes with a melt indexer prewarmed at 300°C for five minutes at a 2.16-kg load in accordance with ASTM D1238.

<Calculation of average dispersed particle size>

A strand of a resin composition obtained by melt kneading was fixed in the sample holder of a microtome (available from Leica) and then sliced into a section. The cross section of the obtained section was observed with a laser microscope (available from Keyence Corporation). In the obtained image, domains in the dispersed phase were selected and the average dispersed particle size thereof was determined with image analysis software (Image J). For the strand of the resin composition after the MFR measurement, the average dispersed particle size of the dispersed phase was determined in the same manner. The dispersed particle sizes of 20 domains in the dispersed phase were measured and then averaged to provide the average dispersed particle size (before MFR measurement) and the average dispersed particle size (after MFR measurement).

<Charpy impact strength>

A specimen (127 mm $\times$ 12.7 mm $\times$ 3.2 mm) prepared with an injection molder at a cylinder temperature of 320°C and a mold temperature of 130°C was notched to a depth of 2.5 mm. The Charpy impact strength of the specimen was measured with an impact tester in accordance with ASTM D 6110. The measurement was performed five times for each level and the obtained values were averaged to provide the value for Charpy impact strength.

<Flexural modulus and bending strength>

The flexural modulus and bending strength of a specimen (127 mm $\times$ 12.7 mm $\times$ 3.2 mm) prepared with an injection molder at a cylinder temperature of 320°C and a mold temperature of 130°C were determined with a universal testing machine at a test speed of 2 mm/min in accordance with ASTM D 790. The measurement was performed five times for each level and the obtained values were averaged to provide the values for flexural modulus and bending strength.

<Tensile breaking strength and tensile elongation at break>

A dumbbell specimen (ASTM type V) prepared with an injection molder at a cylinder temperature of 320°C and a mold temperature of 130°C was subjected to measurement of the tensile breaking strength and tensile elongation at break at a test speed of 10 mm/min and an initial chuck distance of 25.4 mm in accordance with ASTM D 638. The tensile elongation at break was calculated according to (travel distance from initial chuck distance)/25.4 (initial chuck distance). The measurement was performed five times for each level, and the obtained values were averaged to provide the values for the tensile breaking strength and the tensile elongation at break.

<Surface roughness Ra>

A specimen (127 mm $\times$ 12.7 mm $\times$ 3.2 mm) was prepared with an injection molder at a cylinder temperature of 320°C and a mold temperature of 130°C and was subjected to measurement of the surface roughness with a surface roughness tester (SURFTEST SV-600 available from Mitutoyo Corporation) in accordance with JIS B 0601-1994. The measurement was performed three times at five measurement points, and the obtained measurement values were averaged to provide the surface roughness Ra. The measurement portion of the specimen was on a surface with an area of 127 mm $\times$ 12.7 mm located on a side remoted from the gate. The distance from the gate portion was set to 100 mm, and the measurement was performed at the center of the surface.

The following materials were used in the examples and the comparative examples.

Polyarylene sulfide (1): polyphenylene sulfide ("MA-520" available from DIC Corporation, MFR: 66 g/10 min (300 °C, 2.16 kg))

Fluorine-containing copolymer (1): tetrafluoroethylene/hexafluoropropylene copolymer (composition mass ratio: tetrafluoroethylene/hexafluoropropylene = 87.5/12.5, MFR: 3.7 g/10 min (300°C, 2.16 kg), MFR: 23 g/10 min (372°C, 5.0 kg), number of functional groups containing a carbonyl group: 34 carboxy groups for each $1 \times 10^6$ carbon atoms, 28 haloformyl groups)

Fluorine-containing copolymer (2): tetrafluoroethylene/hexafluoropropylene/perfluoro(propyl vinyl ether) copolymer (composition mass ratio: tetrafluoroethylene/hexafluoropropylene/perfluoro(propyl vinyl ether) = 87.3/11.5/1.2, MFR: 5.6 g/10 min (300°C, 2.16 kg), MFR: 37 g/10 min (372°C, 5.0 kg), number of functional groups containing a carbonyl group: 398 carboxy groups for each $1 \times 10^6$ carbon atoms, 0 haloformyl groups)

Fluorine-containing copolymer (3): tetrafluoroethylene/perfluoro(propyl vinyl ether) copolymer (composition mass ratio: tetrafluoroethylene/perfluoro(propyl vinyl ether) = 95.5/4.5, MFR: 15 g/10 min (372°C, 5.0 kg), number of functional groups containing a carbonyl group: 10 carboxy groups for each $1 \times 10^6$ carbon atoms, 19 haloformyl groups, 58 alkoxy carbonyl groups)

Compatibilizer (A-1): ethylene/glycidyl methacrylate copolymer ("BF-E" available from Sumitomo Chemical Co., Ltd., glycidyl methacrylate content 12% by mass), glass transition temperature -26°C

Compatibilizer (A-2): ethylene/glycidyl methacrylate/methyl acrylate copolymer ("BF-7M" available from Sumitomo Chemical Co., Ltd., glycidyl methacrylate content 6% by mass, methyl acrylate content 27% by mass), glass transition temperature -33°C

Compatibilizer (A-3): ethylene/glycidyl methacrylate/vinyl acetate copolymer ("BF-7B" available from Sumitomo Chemical Co., Ltd., glycidyl methacrylate content 12% by mass, vinyl acetate content 5% by mass), glass transition temperature -28°C

Compatibilizer (B-1): isocyanate silane ("KBE-9007" available from Shin-Etsu Chemical Co., Ltd.)

Compatibilizer (B-2): epoxy silane ("KBM-403" available from Shin-Etsu Chemical Co., Ltd.)

Compatibilizer (B-3): amino silane ("KBE-903" available from Shin-Etsu Chemical Co., Ltd.)

Compatibilizer (C): Tafmer ("MH-7020" available from Mitsui Chemicals, Inc.)

<Example 1>

The polyarylene sulfide (1), the fluorine-containing copolymer (2), and the compatibilizer (A-1) were preliminarily mixed in the proportions (parts by mass) shown in Table 1, and the mixture was melt kneaded with a biaxial extruder ($\phi$15 mm, L/D = 60) at a cylinder temperature of 300°C and a screw rotation speed of 300 rpm to produce pellets (and strands) of a resin composition.

For the resulting pellets (and strands) of the resin composition, the MFR, average dispersed particle sizes of the dispersed phase in the resin composition, Charpy impact strength, flexural modulus, bending strength, tensile breaking strength, tensile elongation at break, and surface roughness were determined by the above methods. The results are shown in Table 1.

<Examples 2 and 3>

Pellets (and strands) of a resin composition were produced as in Example 1, except that the compatibilizer (A-2) or (A-3) was used instead of the compatibilizer (A-1) and the proportions (parts by mass) of the polyarylene sulfide (1), the fluorine-containing copolymer (2), and the compatibilizer (A-2) or (A-3) were changed according to Table 1.

For the resulting pellets (and strands) of the resin composition, the MFR, average dispersed particle sizes of the dispersed phase in the resin composition, Charpy impact strength, flexural modulus, bending strength, tensile breaking strength, tensile elongation at break, and surface roughness were determined by the above methods. The results are shown in Table 1.

<Examples 4 and 6>

Pellets (and strands) of a resin composition were produced as in Example 1, except that the fluorine-containing copolymer (1) was used instead of the fluorine-containing copolymer (2) and the proportions (parts by mass) of the polyarylene sulfide (1), the fluorine-containing copolymer (1), and the compatibilizer (A-1) were changed according to Table 1.

For the resulting pellets (and strands) of the resin composition, the MFR, average dispersed particle sizes of the dispersed phase in the resin composition, Charpy impact strength, flexural modulus, bending strength, tensile breaking strength, tensile elongation at break, and surface roughness were determined by the above methods. The results are shown in Table 1.

<Example 5>

Pellets (and strands) of a resin composition were produced as in Example 1, except that the fluorine-containing copolymer (3) was used instead of the fluorine-containing copolymer (2) and the proportions (parts by mass) of the polyarylene sulfide (1), the fluorine-containing copolymer (3), and the compatibilizer (A-1) were changed according to Table 1.

For the resulting pellets (and strands) of the resin composition, the MFR, average dispersed particle sizes of the dispersed phase in the resin composition, Charpy impact strength, flexural modulus, bending strength, tensile breaking strength, tensile elongation at break, and surface roughness were determined by the above methods. The results are shown in Table 1.

<Comparative Example 1>

For the polyarylene sulfide (1), the MFR, Charpy impact strength, flexural modulus, bending strength, tensile breaking strength, tensile elongation at break, and surface roughness were determined by the above methods. The results are shown in Table 1.

<Comparative Example 2>

Pellets (and strands) of a resin composition were produced as in Example 1, except that no compatibilizer was used, the fluorine-containing copolymer (1) was used instead of the fluorine-containing copolymer (2), and the proportions (parts by mass) of the polyarylene sulfide (1) and the fluorine-containing copolymer (1) were changed according to Table 1.

For the resulting pellets (and strands) of the resin composition, the MFR, average dispersed particle sizes of the dispersed phase in the resin composition, Charpy impact strength, flexural modulus, bending strength, tensile breaking strength, tensile elongation at break, and surface roughness were determined by the above methods. The results are shown in Table 1.

<Comparative Example 3>

Pellets (and strands) of a resin composition were produced as in Example 1, except that no compatibilizer was used, and the proportions (parts by mass) of the polyarylene sulfide (1) and the fluorine-containing copolymer (2) were changed according to Table 1.

For the resulting pellets (and strands) of the resin composition, the MFR, average dispersed particle sizes of the dispersed phase in the resin composition, Charpy impact strength, flexural modulus, bending strength, tensile breaking strength, tensile elongation at break, and surface roughness were determined by the above methods. The results are shown in Table 1.

<Comparative Examples 4 to 7>

Pellets (and strands) of a resin composition were produced as in Example 1, except that the fluorine-containing copolymer (1) was used instead of the fluorine-containing copolymer (2), the compatibilizer (B-1), (B-2), (B-3), or (C) was used instead of the compatibilizer (A-1), and the proportions (parts by mass) of the polyarylene sulfide (1), the fluorine-containing copolymer (1), and the compatibilizer were changed according to Table 1.

For the resulting pellets (and strands) of the resin composition, the MFR, average dispersed particle sizes of the dispersed phase in the resin composition, Charpy impact strength, flexural modulus, bending strength, tensile breaking strength, tensile elongation at break, and surface roughness were determined by the above methods. The results are shown in Table 1.

[Table 1]

| | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|
| Polyarylene sulfide (1) | parts by mass | 80 | 80 | 80 | 80 | 80 | 80 | 100 | 80 | 80 | 80 | 80 | 80 | 75 |
| Fluorine-containing copolymer (1) | | | | | 20 | | 20 | | 20 | | 20 | 20 | 20 | 20 |
| Fluorine-containing copolymer (2) | | 20 | 20 | 20 | | | | | | 20 | | | | |
| Fluorine-containing copolymer (3) | | | | | | 20 | | | | | | | | |
| Compatibilizer (A-1) | | 5 | | | 5 | 5 | 10 | | | | | | | |
| Compatibilizer (A-2) | | | 5 | | | | | | | | | | | |
| Compatibilizer (A-3) | | | | 5 | | | | | | | | | | |
| Compatibilizer (B-1) | | | | | | | | | | | 1.5 | | | |
| Compatibilizer (B-2) | | | | | | | | | | | | 1.5 | | |
| Compatibilizer (B-3) | | | | | | | | | | | | | 1.5 | |
| Compatibilizer (C) | | | | | | | | | | | | | | 5 |
| MFR | g/10 min | 21 | 40 | 27 | 22 | 17 | 14 | 66 | 75 | 70 | 35 | 29 | 2 | 60 |

| | | Example 1 | Example 2 | Example 3 | Example 4 | Example 5 | Example 6 | Compara-tive Example 1 | I Compara-tive Example 2 | Compara-tive Example 3 | Compara-tive Example 4 | Compara-tive Example 5 | Compara-tive Example 6 | Compara-tive Example 7 |
|---|---|---|---|---|---|---|---|---|---|---|---|---|---|---|
| Average dispersed particle size (before MFR measurement) | $\mu$m | 2.4 | 3.7 | 2.8 | 2.3 | 3.2 | 12 | - | 6.5 | 7.7 | 2.0 | 5.4 | 2.4 | 2.0 |
| Average dispersed particle size (after MFR measurement) | $\mu$m | 3.7 | 4.1 | 2.5 | 3.7 | 3.5 | 1.5 | - | 7.3 | 5.9 | 1.2 | 6.5 | 3.0 | 3.9 |
| Charpy impact strength | kJ/m$^2$ | 6.8 | 6.6 | 6.7 | 7.0 | 6.8 | 10.1 | 2.5 | 3.6 | 3.4 | 4.7 | 3.6 | 6.5 | 3.4 |
| Flexural modulus | GPa | 2.6 | 2.7 | 2.7 | 2.7 | 2.7 | 22 | 3.5 | 3.3 | 3.1 | 3.0 | 3.0 | 3.3 | 2.6 |
| Bending strength | MPa | 96 | 96 | 98 | 99 | 97 | 88 | 138 | 111 | 114 | 113 | 112 | 105 | 96 |
| Tensile breaking strength | MPa | 59 | 56 | 59 | 60 | 59 | 48 | 82 | 65 | 61 | 71 | 68 | 74 | 46 |
| Tensile elongation at break | % | 18.0 | 17.1 | 17.1 | 17.6 | 17.4 | 17.8 | 8.3 | 6.4 | 5.8 | 14.2 | 6.7 | 12.1 | 6.6 |
| Surface roughness Ra | $\mu$m | 0.05 | 0.06 | 0.05 | 0.06 | 0.06 | 0.05 | 0.04 | 0.13 | 0.10 | 0.05 | 0.14 | 027 | 0.16 |

EP 3 789 458 A1

**Claims**

1. A resin composition comprising:

   a polyarylene sulfide (a);
   a fluorine-containing copolymer (b); and
   a reactive functional group-containing compound (c),
   the polyarylene sulfide (a) and the fluorine-containing copolymer (b) giving a mass ratio (a):(b) of 99:1 to 40:60,
   the compound (c) being present in an amount of 0.1 to 35 parts by mass relative to 100 parts by mass of a total of the polyarylene sulfide (a) and the fluorine-containing copolymer (b),
   the resin composition having a tensile elongation at break in accordance with ASTM D 638 of 15% or more.

2. The resin composition according to claim 1,
   wherein the resin composition has a Charpy impact strength in accordance with ASTM D 6110 of 5.5 kJ/m$^2$ or more.

3. The resin composition according to claim 1 or 2,
   wherein the resin composition has a surface roughness Ra in accordance with JIS B 0601-1994 of 0.10 $\mu$m or less.

4. The resin composition according to any one of claims 1 to 3,
   wherein the fluorine-containing copolymer (b) is a copolymer containing, of all polymerized units, 75% by mass or more of a polymerized unit based on tetrafluoroethylene and 1% by mass or more of a polymerized unit based on at least one selected from the group consisting of hexafluoropropylene and perfluoro(alkyl vinyl ether), and the fluorine-containing copolymer (b) contains 5 to 500 carbonyl groups for each $1 \times 10^6$ carbon atoms.

5. The resin composition according to any one of claims 1 to 3,
   wherein the fluorine-containing copolymer (b) includes at least one selected from the group consisting of
   a copolymer (b1) containing, of all polymerized units, 98 to 80% by mass of a polymerized unit based on tetrafluoroethylene and 2 to 20% by mass of a polymerized unit based on hexafluoropropylene,
   a copolymer (b2) containing, of all polymerized units, 98 to 85% by mass of a polymerized unit based on tetrafluoroethylene and 2 to 15% by mass of a polymerized unit based on perfluoro(alkyl vinyl ether), and
   a copolymer (b3) containing, of all polymerized units, 95 to 77% by mass of a polymerized unit based on tetrafluoroethylene, 5 to 18% by mass of a polymerized unit based on hexafluoropropylene, and more than 0% by mass and not more than 5% by mass of a polymerized unit based on perfluoro(alkyl vinyl ether).

6. The resin composition according to any one of claims 1 to 5,
   wherein the compound (c) is an ethylene/glycidyl methacrylate copolymer having a glycidyl methacrylate content of 1 to 20% by mass.

7. The resin composition according to any one of claims 1 to 6,
   wherein the fluorine-containing copolymer (b) has a melt flow rate at 300°C of 0.1 to 100 g/10 min.

8. The resin composition according to any one of claims 1 to 6,
   wherein the fluorine-containing copolymer (b) has a melt flow rate at 372°C of 0.1 to 100 g/10 min.

9. The resin composition according to any one of claims 1 to 8,
   wherein the polyarylene sulfide (a) forms a continuous phase and the fluorine-containing copolymer (b) forms a dispersed phase.

10. The resin composition according to any one of claims 1 to 9,
    wherein the fluorine-containing copolymer (b) has an average dispersed particle size of 0.01 to 5 $\mu$m.

11. The resin composition according to any one of claims 1 to 10, having a melt flow rate at 300°C of 1 to 200 g/10 min.

12. The resin composition according to any one of claims 1 to 10, having a melt flow rate at 372°C of 1 to 200 g/10 min.

EP 3 789 458 A1

**INTERNATIONAL SEARCH REPORT**

| | International application No. |
|---|---|
| | PCT/JP2019/020432 |

A. CLASSIFICATION OF SUBJECT MATTER
Int.Cl. C08L81/02(2006.01)i, C08L23/08(2006.01)i, C08L27/18(2006.01)i

According to International Patent Classification (IPC) or to both national classification and IPC

B. FIELDS SEARCHED

Minimum documentation searched (classification system followed by classification symbols)
Int.Cl. C08L81/02, C08L23/08, C08L27/18

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2015-110732 A (TORAY INDUSTRIES, INC.) 18 June 2015, claims, paragraphs [0071]-[0075], [0080]-[0091], [0102], examples (Family: none) | 1-12 |
| Y | | 4 |
| X | JP 11-201304 A (NTN CORPORATION) 30 July 1999, claims, paragraphs [0043], [0046], [0055], examples (Family: none) | 1-3, 5-8, 11, 12 |
| Y | | 4 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 August 2019 (13.08.2019) | 20 August 2019 (20.08.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

17

**INTERNATIONAL SEARCH REPORT**

International application No.

PCT/JP2019/020432

C (Continuation).   DOCUMENTS CONSIDERED TO BE RELEVANT

| Category* | Citation of document, with indication, where appropriate, of the relevant passages | Relevant to claim No. |
|---|---|---|
| X | JP 8-337720 A (JAPAN SYNTHETIC RUBBER CO., LTD.) 24 December 1996, claims, paragraphs [0030], [0039], [0058], examples & JP 8-337721 A | 1-3, 5-8, 11, 12 |
| Y | | 4, 6 |
| X | JP 2014-105258 A (HITACHI, LTD.) 09 June 2014, claims, paragraphs [0029], [0033], [0045], examples (Family: none) | 1, 2, 5, 7-12 |
| Y | | 4, 6 |
| A | JP 2014-502690 A (TICONA LLC) 03 February 2014, entire text & US 2013/0323447 A1, whole document & WO 2012/088375 A2 & EP 2655846 A2 & CN 103370527 A & KR 10-2013-0142171 A | 1-12 |
| A | JP 2008-235265 A (ASAHI KASEI CHEMICALS CORP.) 02 October 2008, entire text (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015008583 A
- JP 2014105258 A
- JP 2015110732 A
- JP 2016027147 A
- JP 4223089 B
- JP 2002322334 A
- JP 2006328195 A
- WO 2009021922 A
- JP 5733470 B
- JP S61281146 A